# FASCICULE DE BREVET EUROPEEN

(11) **EP 1 578 880 B1**
(45) Date de publication et mention de la délivrance du brevet: **01.05.2013**
(21) Numéro de dépôt: 03799502.4
(22) Date de dépôt: 22.12.2003
(51) Int. Cl.: C09J 163/10, B32B 27/12, B32B 37/00, C09J 167/06

(54) **COMPOSITION ADHESIVE POUR LE COLLAGE DIRECT D UN COMPOSITE POLYESTER OU VINYLESTER PREGELIFIE A DU CAOUTCHOUC CRU**
KLEBSTOFFZUSAMMENSETZUNG FÜR DIREKTVERKLEBUNG VON VORGELIERTEN POLYESTER- ODER VINYLESTERVERBUNDWERKSTOFFEN AN ROHKAUTSCHUK
ADHESIVE COMPOSITION FOR THE DIRECT JOINING OF A PRE-GELLED POLYESTER OR VINYL ESTER TO RAW RUBBER

(30) Priorité: 27.12.2002 FR 0216945
(43) Date de publication de la demande: 28.09.2005
(73) Titulaire: Michelin Recherche et Technique S.A., 1763 Granges-Paccot (CH)
(72) Inventeur: CHENAUX, Philippe, CH-1727 Corpataux (CH); DELFINO, Antonio, CH-1772 Grolley (CH)
(74) Mandataire: Ribière, Joel
(86) Numéro de dépôt international: PCT/EP2003/014784
(87) Numéro de publication internationale: WO 2004/058909

(56) Documents cités:
- EP-A- 0 322 044
- EP-A- 1 074 369
- WO-A-84/00170
- GB-A- 1 082 493
- US-A- 2 898 259
- US-A- 3 949 141

## Description

La présente invention est relative aux compositions adhésives ou "colles" utilisables pour le collage du caoutchouc aux matériaux composites, en particulier au collage d'élastomères diéniques sur des composites à base de résine polyester ou vinylester. Elle se rapporte également à la fabrication de pièces composites rendues solidaires à du caoutchouc.

La demande de brevet WO00/37269 décrit un bandage flexible non pneumatique dans lequel la reprise de la charge est assurée par des pièces lamifiées comportant un empilage de couches de composites constituées essentiellement de fibres noyées dans une résine, avec interposition de couches de caoutchouc, l'ensemble permettant d'obtenir une structure très résistante et apte à supporter sans dommage de grandes déformations. Dans la présente demande, on réserve l'appellation "composite" aux éléments à base de fibres et d'une matrice dans laquelle lesdites fibres sont noyées ; en retenant cette définition, le caoutchouc en couches intercalaires apparaissant dans lesdites pièces lamifiées ne fait pas partie du composite.

En outre, si l'on veut donner à ce bandage élastique, comme à tout produit industriel, les meilleures chances de succès commercial, encore faut-il que ce produit industriel puisse être fabriqué par un procédé robuste, sans dérive, c'est à dire un procédé avec lequel on puisse facilement maîtriser les caractéristiques du produit fabriqué. En outre, pour des pièces à fabriquer en très grand nombre, il est hautement souhaitable que le procédé se prête à des cadences de fabrication élevées.

Par la demande de brevet EP-A-1 074 369, on a déjà proposé un procédé de fabrication de pièces composites dont l'un des objectifs secondaires est de pouvoir marier la pièce composite avec du caoutchouc pour fabriquer un élément lamifié adapté à un emploi dans un bandage élastique. Cette demande décrit un procédé comportant une phase de prépolymérisation : des fibres sont noyées dans une matrice à base d'une composition comprenant une résine durcissable, la composition contenant lesdites fibres est exposée à un rayonnement ionisant pour polymériser partiellement la résine et obtenir un pré-composite (composite dit également "prégélifié") dans lequel ladite composition est en phase solide. Le résultat recherché est d'obtenir une pièce finale sans dégradation notable de l'effet de renforcement maximal possible en fonction des fibres sélectionnées, la pièce pouvant avoir des formes très variées, notamment des rayons de courbure très petits. Les pièces assurant la reprise de la charge décrites dans la demande WO00/37269 peuvent être fabriquées selon le procédé décrit dans cette demande EP-A-1 074 369.

En ce qui concerne le collage au caoutchouc, cette demande EP-A-1 074 369 cite l'utilisation d'une colle bien connue du type résorcinol formaldéhyde latex (dite "RFL"), séchée avant de recevoir ladite couche de caoutchouc à l'état cru. De la sorte, on obtient une certaine solidarisation du pré-composite et du caoutchouc. Ensuite, l'étape de moulage final de la pièce lamifiée, avec traitement thermique sous pression, permet à la fois la réticulation ou cuisson du caoutchouc, la polymérisation complète de la résine et une excellente solidarisation du composite au caoutchouc.

Malheureusement, l'utilisation d'une colle RFL non polymérisée, si elle permet de ne pas recourir à des élastomères spéciaux pour coller le caoutchouc sur le matériau composite, et si elle permet de réaliser un collage performant mécaniquement, impose cependant une étape intermédiaire et supplémentaire de séchage de ladite colle RFL, avant contact avec le caoutchouc, ce qui est plutôt antinomique de la recherche de cadences de fabrication élevées.

Le problème non encore résolu dans l'état de la technique est donc de trouver les moyens d'assurer un collage tout à la fois performant mécaniquement et qui se prête à une mise en oeuvre industrielle très efficace.

Or, la Demanderesse a découvert lors de ses recherches une solution au problème ci-dessus, qui plus est sans pénalisation aucune des performances d'adhésion. Des gains de temps de réalisation très significatifs sont obtenus et il n'y a en outre aucun solvant (eau ou autre solvant) à évacuer pendant l'opération de collage, ce qui constitue un autre avantage notable en soi.

En conséquence, selon un premier objet, l'invention concerne une composition adhésive selon la revendication 1 utilisable pour le collage direct d'un pré-composite polyester ou vinylester à du caoutchouc cru.

L'invention concerne également, selon un second objet, un procédé pour préparer une telle composition, ledit procédé comportant les étapes suivantes :
a) partir d'un latex d'élastomère p-VSBR ;
b) extraire l'eau du latex ;
c) incorporer à l'élastomère une résine polyester ou vinylester en solution dans du styrène.

Cette composition ne nécessite aucune étape de séchage intermédiaire, elle permet d'assurer un collage direct d'un élastomère diénique non vulcanisé (i.e., à l'état cru) sur un pré-composite polyester ou vinylester, sans traitement d'activation au moment de son emploi.

Ainsi, l'invention concerne également l'utilisation d'une composition adhésive selon l'invention pour le collage d'un composite polyester ou vinylester à un élastomère diénique.

La présente invention concerne également en soi un procédé de réalisation de pièces stratifiées comprenant au moins un composite comportant des fibres de renforcement noyées dans une matrice à base d'une composition comprenant une résine durcissable et au moins un caoutchouc solidaire dudit composite, ledit procédé comportant les étapes suivantes :
- disposer un pré-composite comportant des fibres de renforcement noyées dans la résine, celle-ci étant prépolymérisée ;
- revêtir ledit pré-composite d'une couche d'une composition adhésive prête à l'emploi selon l'invention;
- revêtir ladite composition d'une couche de caoutchouc vulcanisable au soufre ;
- soumettre l'empilage comprenant le pré-composite, la composition adhésive et le caoutchouc à un moulage final sous une pression et à une température appropriées afin de poursuivre la polymérisation de la résine, la vulcanisation de l'élastomère, la réticulation de la composition adhésive avec le caoutchouc et la polymérisation de la composition adhésive avec la résine.

Enfin, la présente invention s'étend à toute pièce stratifiée comportant au moins une couche de composite polyester ou vinylester reliée à une couche de caoutchouc, la liaison entre les deux couches étant assurée par une interphase adhésive comportant une composition adhésive non-aqueuse à base d'élastomère p-VSBR et de résine polyester ou vinylester.

### I. DESCRIPTION DETAILLEE DE L'INVENTION

Dans la présente description, sauf indication expresse différente, tous les pourcentages (%) indiqués sont des % en poids.

### I-1. - Composition adhésive

La colle de l'invention a pour caractéristique essentielle d'être à base d'un élastomère p-VSBR associé à une résine polyester ou vinylester.

Les résines vinylester sont bien connues dans le domaine des matériaux composites ; sans que cette définition soit limitative, la résine vinylester est préférentiellement du type époxyvinylester. Par ailleurs, par "résine polyester", on entend de manière connue une résine du type polyester insaturé .

L'homme du métier saura ajuster la formulation de la colle de l'invention à la lumière de la description et des exemples de réalisation qui suivent.

Pour une efficacité optimale de cette colle comparée à une colle RFL conventionnelle, en particulier lors de la fabrication de pièces composites selon l'invention, on préfère que le taux de p-VSBR soit compris entre 10% et 40% et que celui de la résine polyester ou vinylester soit compris entre 40% et 80% (% en poids de composition à l'état "sec" c'est-à-dire sans aucun solvant - exclus le solvant de la résine elle-même - ni eau).

Plus préférentiellement, le taux de p-VSBR est compris entre 15% et 30%, en particulier entre 15% et 25%, et le taux de résine polyester ou vinylester est compris entre 50% et 75%, en particulier entre 60% et 75%.

Cette composition adhésive, réticulable au soufre grâce à la présence de l'élastomère p-VSBR, est apte à assurer le collage direct d'un pré-composite polyester ou vinylester à un élastomère (ou caoutchouc) diénique à l'état cru.

Comme décrit dans la demande EP-A-1 074 369 précitée, on entend plus précisément par "pré-composite" un matériau composite dont la résine est prépolymérisée (ou "prégélifiée ») jusqu'à former un milieu solide (stade dit de gélification ou au delà), afin que le pré-composite possède une cohésion suffisante pour pouvoir être manipulé, par exemple afin de le placer dans un moule ouvert, avec les sollicitations mécaniques que cela suppose, sans risquer un "essorage" des fibres au cours duquel le taux de résine de la préforme diminuerait de façon non maîtrisée. Par l'expression moule ouvert, on n'exclut bien entendu pas que le moule soit ultérieurement fermé au cours d'une étape de fabrication du composite final ; on veut simplement donner à l'homme du métier une appréciation du niveau de propriétés mécaniques à atteindre. Les propriétés mécaniques à atteindre doivent être juste suffisantes pour que le pré-composite puisse être manipulé, mais en même temps aussi faibles que possible pour que le pré-composite se prête facilement à toute déformation et conformation et il est souhaitable que ces déformations et conformations ne s'accompagne que d'un niveau de contraintes internes aussi faibles que possible, c'est à dire négligeables.

L'objectif de la prépolymérisation est donc d'atteindre un niveau minimal de polymérisation permettant d'éviter tout écoulement de résine lors d'un traitement ultérieur de celle-ci (en fait, un traitement du composite ou de l'article dans lequel il sera incorporé) sous l'action de la température, voire sous l'action de la pression. L'objectif de la prépolymérisation est aussi d'atteindre un niveau minimal de polymérisation permettant de conférer au pré-composite une résistance au flambage de ses fibres lors d'une flexion telle qu'imposée par l'étape d'application sur un support de forme non plane, tout en évitant comme déjà dit d'introduire des précontraintes lors de la flexion. La prépolymérisation telle que proposée, associée à une mise en oeuvre du matériau par stratification en couches suffisamment minces, permet de reconstituer un bloc de forme et d'épaisseur quelconques, par rapport à un matériau monolithique préparé avec la même résine et les mêmes fibres en densité identique, préparé par exemple par pultrusion.

Ces définitions de nature mécanique étant données, on entend également par "pré-composite" polyester ou vinylester, ou composite polyester ou vinylester "prégélifié", un composite dont la matrice en résine polyester ou vinylester, de par son état prépolymérisé, possède une température de transition vitreuse Tg (mesurée selon norme ASTM D3418-82) comprise préférentiellement entre 40 et 130°C ou une dureté Shore D (mesurée selon norme ASTM D2240-86) comprise préférentiellement entre 50 et 65.

L'élastomère p-VSBR consiste de manière connue en un polyvinylpyridine couplé à un élastomère diénique SBR (styrène-butadiène-rubber) ; il répond à la formule générale :

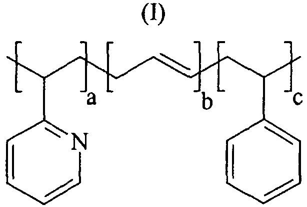

C'est un polymère ayant une masse moléculaire très élevée, de préférence de 500 000 à 1 000 000 g/mol. Il est généralement disponible commercialement sous forme d'un latex (émulsion en phase aqueuse basique diluée), par exemple à un taux voisin de 40% en poids de polymère.

Les résines polyester ou vinylester sont bien connues de l'homme du métier, elles ont été décrites dans de nombreux ouvrages, notamment dans la demande EP-A-1 074 369 précitée, ou encore, à titre d'exemples, dans les documents US 6 329 475 ou WO 84/00170 décrivant en détail ce type de composé.
L'état de la technique est également constitué par le brevet US-A-3 949 141 (ci-après D1), cité dans le rapport de recherche.
D1 décrit des compositions destinées au traitement par imprégnation de fibres telles que des fibres de verre, préalablement à l'incorporation à du caoutchouc.
La base de la composition d'imprégnation est une résine polyester aziridine. Cette résine aziridine peut être combinée à un élastomère p-VSBR, mais toujours en présence d'une quantité importante d'eau. Lorsque la composition d'imprégnation est du type non-aqueuse, elle peut contenir soit la résine aziridine seule, soit l'élastomère p-VSBR seul, mais ces deux composants ne sont jamais associés pour former une composition adhésive du type non aqueuse telle que celle de la présente invention, utilisable pour le collage direct d'un composite polyester ou vinylester à du caoutchouc à l'état cru.

On utilise préférentiellement une résine vinylester, notamment du type époxyde, qui au moins pour partie est à base (c'est-à-dire greffée sur une structure du type) novolaque (encore appelée phénoplaste) et/ou bisphénolique (soit à base novolaque, bisphénolique, ou novolaque et bisphénolique).

Une résine époxyvinylester à base novolaque (partie entre crochets) répond par exemple de manière connue à la formule :

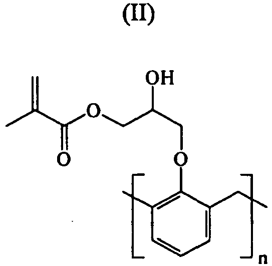

Une résine époxyvinylester à base bisphénolique A (partie entre crochets de la formule III ci-dessous) répond par exemple à la formule (le "A" rappelant que le produit est fabriqué à l'aide d'acétone):

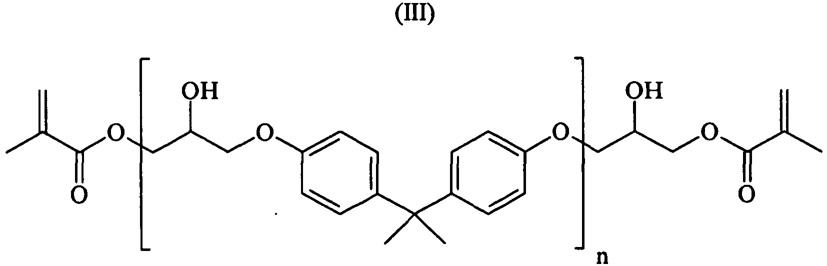

Une résine époxyvinylester de type novolaque et bisphénolique a montré d'excellents résultats, améliorés notamment par rapport à une résine bisphénolique seule, en raison d'un meilleur pouvoir collant à cru et donc d'une mise en oeuvre facilitée. A titre d'exemple d'une telle résine, on peut citer notamment la résine vinylester "ATLAC 590" de la société DSM (diluée avec environ 40% de styrène) décrite dans la demande EP-A-1 074 369 précitée . De telles résines époxyvinylester sont disponibles chez d'autres fabricants tels que Dow, Reichhold, Cray Valley, UCB.

La composition adhésive de l'invention présente une viscosité importante, ce qui peut rendre sa mise en oeuvre industrielle assez difficile. C'est pourquoi et de préférence, on en diminue la viscosité en ajoutant un solvant de la résine à un taux compris entre 0% et 40% (% en poids de colle finale, c'est-à-dire prête à l'emploi). Ce solvant de la résine est préférentiellement du styrène.

Plus préférentiellement, le taux de solvant est ajusté entre 5% et 35%, afin de donner une fluidité adéquate à la composition de l'invention ; en dessous de 5%, cette fluidité peut s'avérer insuffisante en fonction de l'application industrielle visée ; au-delà de 35% ou 40%, on s'expose à un risque de fluidité trop élevée et il peut devenir difficile de mettre en oeuvre la composition en couches restant homogènes après application des couches de matériau à coller (risque d'apparition de phénomènes parasites d'essorage). Pour une application optimale de la colle lors de la fabrication des éléments lamifiés décrits ultérieurement, on utilisera un taux de solvant compris de préférence entre 10% et 30%, plus préférentiellement encore compris entre 10% et 20%.

Contrairement aux colles connues de l'homme du métier à base de p-VSBR, la colle de l'invention ne nécessite pas la présence d'eau.

C'est en cela qu'elle peut être qualifiée de "non-aqueuse" ou du type non-aqueuse, bien qu'elle puisse supporter sans dommage la présence d'eau en faible quantité. Par composition "non aqueuse", on entend dans la présente demande une composition comportant moins de 5% en poids d'eau (% en poids de composition finale, prête à l'emploi) ; au-delà de 5%, on a constaté que le collage en soi n'était certes pas affecté, mais que la composition finale contenait ou pouvait contenir des particules solides (grumeaux) gênant la mise en oeuvre et l'application de la colle avec des outils industriels. Pour cette raison, on préfère que la composition "non-aqueuse" de l'invention contienne moins de 2%, plus préférentiellement encore moins de 1% en poids d'eau.

Afin d'obtenir des temps de cuisson compatibles avec ceux du caoutchouc, les compositions adhésives de l'invention comportent avantageusement des accélérateurs et activateurs connus de polymérisation de la résine elle-même, tels que sels de cobalt II (par exemple le 2-éthylhexanoate de cobalt), diméthylaniline (DMA) ou diéthylaniline (DEA), N,N-diméthylacétoacétamide (DMAA) ou N,N-diéthylacétoacétamide (DEAA), ceci à des taux typiquement compris entre 0,3 et 3,0 pce.

Les compositions adhésives de l'invention comportent également tout ou partie des additifs habituellement utilisés dans des colles destinées au collage du caoutchouc à des matériaux composites, tels que des charges renforçantes comme le noir de carbone ou la silice, des agents anti-vieillissement, par exemple des antioxydants, des plastifiants, des agents de couplage, un système de réticulation à base soit de soufre, soit de donneurs de soufre et/ou de peroxyde, des accélérateurs, des activateurs ou retardateurs de vulcanisation, des accepteurs et donneurs de méthylène (tels que HMT ou H3M), des résines renforçantes tels que résorcinol, bismaléimide, des résines tackifiantes.

Le système de réticulation (vulcanisation) proprement dit est préférentiellement à base de soufre et d'un accélérateur primaire de vulcanisation, en particulier d'un accélérateur du type sulfénamide. A ce système de vulcanisation de base viennent s'ajouter le cas échéant divers accélérateurs secondaires ou activateurs de vulcanisation connus tels que oxyde de zinc, acide stéarique, etc. Le soufre est utilisé à un taux préférentiel compris entre 0,5 et 10 pce, plus préférentiellement compris entre 0,5 et 5,0 pce. L'accélérateur primaire de vulcanisation est utilisé à un taux préférentiel compris entre 0,5 et 10 pce, plus préférentiellement compris entre 0,5 et 5,0 pce.

### I-2. - Préparation de la composition adhésive

La composition adhésive précédemment décrite est susceptible d'être préparée par un procédé constituant un autre objet de l'invention ; ce procédé comporte les étapes suivantes :
a) partir d'un latex d'élastomère p-VSBR ;
b) extraire l'eau du latex ;
c) incorporer à l'élastomère une résine polyester ou vinylester en solution dans du styrène.

L'étape b) d'extraction de l'eau du latex peut être conduite par tout moyen connu de l'homme du métier, notamment par l'action d'un agent coagulant tel qu'un sel, une base ou un acide, par exemple par coagulation dans un mélange acétone-eau en milieu acide (ex : HCl) puis neutralisation (à l'eau ou par action d'une base faible), suivie d'une étape de récupération du filtrat et séchage (évaporation du solvant).

L'extraction de l'eau du latex peut être également conduite par distillation azéotropique, auquel cas l'élastomère est mis en solution dans un solvant organique tel que le toluène et une étape d) peut être ajoutée à la suite de l'étape c) ci-dessus afin de procéder à une extraction, au moins partielle, du (ou des) solvant(s) organique(s) utilisé(s).

Selon une telle variante de réalisation, le procédé de l'invention comporte alors les étapes suivantes :
a) partir d'un latex d'élastomère p-VSBR ;
b) par distillation azéotropique, extraire l'eau du latex et mettre l'élastomère en solution dans un solvant organique, de préférence du toluène ;
c) incorporer à l'élastomère en solution une résine polyester ou vinylester en solution dans du styrène ;
d) procéder à une extraction, au moins partielle, des solvants organiques.

On rappelle que, par définition, une distillation azéotropique est une distillation d'un mélange de deux liquides dont les phases liquide et vapeur sont en équilibre thermodynamique sous une pression donnée. Cela se caractérise par une température d'ébullition constante. Le mélange se comporte donc comme un corps pur. Elle permet un échange de solvant, c'est-à-dire ici d'extraire l'eau du latex et de mettre en solution l'élastomère p-VSBR dans le solvant organique choisi.

A l'issue de l'étape b) lorsque cette dernière est conduite par distillation azéotropique, le taux d'élastomère p-VSBR dans le solvant organique est préférentiellement compris entre 0,5% et 5% d'élastomère p-VSBR pour un taux de solvant entre 95% et 99,5%, plus préférentiellement entre 1% et 3% d'élastomère p-VSBR (pour un taux de solvant entre 97% et 99%). Si la concentration en élastomère est plus élevée, on risque une gélification trop rapide de la colle, alors qu'une concentration trop basse n'est pas avantageuse d'un point de vue économique. Le solvant organique recommandé pour cette étape b) est le toluène.

Au cours de l'étape c) le rapport pondéral (résine/élastomère p-VSBR) est de préférence choisi entre 1 et 8. Plus préférentiellement, il est compris entre 1,5 et 7,0, par exemple entre 2,0 et 6,0. Une valeur comprise dans un domaine de 3 à 5, par exemple voisine ou égale à 4, s'est révélée optimale dans un très grand nombre de cas.

C'est préférentiellement au cours de cette étape c) que tous les additifs de la composition adhésive, notamment son système de réticulation, sont ajoutés. De préférence, ces additifs sont eux-mêmes présentés en solution ou en suspension (cas par exemple du noir de carbone et du ZnO qui sont insolubles) dans un liquide organique approprié, de préférence le même que celui utilisé, le cas échéant, pour l'étape b) précédente.

En ce qui concerne le taux de solvant organique (notamment styrène) résiduel en sortie d'étape d), le cas échéant, le lecteur est renvoyé aux considérations relatives à la mise en oeuvre de la composition, étant rappelé que ce solvant est neutre vis-à-vis des performances d'adhésion considérées en tant que telles. Cette étape d'extraction des solvants organiques est avant tout utile pour aboutir à la fluidité particulière visée fonction de l'application considérée. Cette extraction, opérée par exemple par simple évacuation sous vide, peut être conduite jusqu'à un taux de styrène résiduel (% en poids de composition finale) compris de préférence entre 0% et 40%, plus préférentiellement entre 5% et 35%.

Un taux résiduel de styrène compris entre 10% et 30%, plus particulièrement compris entre 10% et 20%, s'est par exemple révélé avantageux pour la fabrication des pièces stratifiées de l'invention décrites ultérieurement.
Selon un mode de réalisation préférentiel de l'invention, les solvants organiques sont extraits, au cours de l'étape d), jusqu'à un taux de styrène résiduel compris entre 0% et 40% et un taux de toluène résiduel compris entre 0% et 5%.
Selon un autre mode de réalisation préférentiel de l'invention, la résine vinylester est une résine vinylester à base novolaque et/ou bisphénolique.

D'autre part et de préférence, dans la composition adhésive finale, les caractéristiques suivantes soient vérifiées :
- taux de toluène résiduel compris entre 0% et 5%, plus préférentiellement inférieur à 2%, encore plus préférentiellement inférieur à 1% ;
- teneur globale en toluène et styrène comprise entre 5% et 40%, plus préférentiellement entre 10% et 30% (notamment entre 10% et 20%).

### I-3. - Utilisation de la composition adhésive pour la fabrication de pièces lamifiées

L'invention concerne également l'utilisation d'une composition adhésive selon l'invention pour le collage direct d'un précomposite polyester ou vinylester à un élastomère diénique non vulcanisé (à l'état cru).

L'invention concerne également en soi, avant comme après cuisson, des pièces ou éléments lamifiés (dits encore "stratifiés") comprenant au moins un composite comportant des fibres de renforcement noyées dans une matrice à base de résine polyester ou vinylester et au moins un caoutchouc solidaire dudit composite, ces pièces lamifiées étant caractérisées en ce que le composite et le caoutchouc sont assemblés et rendus solidaires directement grâce à la composition adhésive de l'invention.

Ces pièces lamifiées se présentent notamment sous forme de couches de composites vinylester et de couches de caoutchouc diénique empilées, comme décrit par exemple dans la demande de brevet EP-A-1 074 369 précitée.

### A) - Couches de pré-composite polyester ou vinylester

En ce qui concerne la préparation du pré-composite, le lecteur est renvoyé, à titre purement illustratif et non limitatif, aux demandes de brevet EP-A-1 074 369 et EP-A-1 174 250. Des couches de pré-composite d'épaisseur donnée sont préparées en disposant des fibres de renforcement sensiblement parallèlement à un plan et en les imprégnant à l'aide d'une composition comprenant une résine polyester ou vinylester durcissable par rayonnement, puis en exposant la composition contenant lesdites fibres, en couche d'épaisseur inférieure à ladite épaisseur donnée, à un rayonnement pour polymériser partiellement la résine utilisée et obtenir ainsi un pré-composite dans lequel ladite composition est en phase solide.

### B) - Couches de caoutchouc

Les couches de caoutchouc sont de manière connue formées de compositions élastomériques à base d'au moins un (un seul ou plusieurs) élastomère diénique.

Par élastomère ou caoutchouc "diénique", on entend de manière connue un élastomère issu au moins en partie (i.e. un homopolymère ou un copolymère) de monomères diènes c'est-à-dire de monomères porteurs de deux doubles liaisons carbone-carbone, conjuguées ou non. Par élastomère diénique "essentiellement insaturé", on entend ici un élastomère diénique issu au moins en partie de monomères diènes conjugués, ayant un taux de motifs ou unités d'origine diénique (diènes conjugués) qui est supérieur à 15% (% en moles). C'est ainsi, par exemple, que des élastomères diéniques tels que les caoutchoucs butyle ou les copolymères de diènes et d'alpha-oléfines type EPDM n'entrent pas dans la définition précédente et peuvent être notamment qualifiés d'élastomères diéniques "essentiellement saturés" (taux de motifs d'origine diénique faible ou très faible, toujours inférieur à 15%). Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

Ces définitions étant données, l'élastomère diénique utilisé est préférentiellement choisi dans le groupe des élastomères diéniques fortement insaturés constitué par les polybutadiènes (BR), le caoutchouc naturel (NR), les polyisoprènes de synthèse (IR), les copolymères de butadiène-styrène (SBR), les copolymères d'isoprène-butadiène (BIR), les copolymères d'isoprène-styrène (SIR), les copolymères de butadiène-styrène-isoprène (SBIR) et les mélanges de ces élastomères.

Un mode de réalisation préférentiel consiste à utiliser un "élastomère isoprénique", c'est-à-dire un homopolymère ou un copolymère d'isoprène, en d'autres termes un élastomère diénique choisi dans le groupe constitué par le caoutchouc naturel (NR), les polyisoprènes de synthèse (IR), les différents copolymères d'isoprène et les mélanges de ces élastomères. Parmi les copolymères d'isoprène, on citera en particulier les copolymères d'isoprène-styrène (SIR), d'isoprène-butadiène (BIR) ou d'isoprène-butadiène-styrène (SBIR).

L'élastomère isoprénique est de préférence du caoutchouc naturel ou un polyisoprène de synthèse du type cis-1,4. Parmi ces polyisoprènes de synthèse, sont utilisés de préférence des polyisoprènes ayant un taux (% molaire) de liaisons cis-1,4 supérieur à 90%, plus préférentiellement encore supérieur à 98%.

Selon d'autres modes de réalisation préférentiels, l'élastomère diénique peut être constitué, en tout ou partie, d'un autre élastomère fortement insaturé tel que, par exemple, un élastomère SBR utilisé en coupage ou non avec un autre élastomère, par exemple du type BR.

Les compositions de caoutchouc des éléments lamifiés comportent également tout ou partie des additifs habituellement utilisés dans les matrices de caoutchouc destinées à la fabrication de pneumatiques, tels que des charges renforçantes comme le noir de carbone ou la silice, des agents anti-vieillissement, par exemple des antioxydants, des huiles d'extension, des plastifiants ou des agents facilitant la mise en oeuvre des compositions à l'état cru, des agents de couplage, un système de réticulation à base soit de soufre, soit de donneurs de soufre et/ou de peroxyde, des accélérateurs, des activateurs ou retardateurs de vulcanisation tels qu'oxyde de zinc, acide stéarique, des accepteurs et donneurs de méthylène tels que par exemple HMT (hexaméthylènetétramine) ou H3M (hexaméthoxyméthylmélamine), des résines renforçantes (tels que résorcinol ou bismaléimide).

### C) - Fabrication des pièces stratifiées

La présente invention concerne également en soi un procédé de fabrication de pièces stratifiées comprenant au moins un composite comportant des fibres de renforcement noyées dans une matrice à base d'une composition comprenant une résine durcissable et au moins un caoutchouc solidaire dudit composite, ledit procédé comportant les étapes suivantes :
A) disposer un pré-composite comportant des fibres de renforcement noyées dans la résine, celle-ci étant prépolymérisée ;
B) revêtir ledit pré-composite d'une couche d'une composition adhésive prête à l'emploi selon l'invention;
C) revêtir ladite composition d'une couche d'élastomère diénique vulcanisable au soufre ;
D) soumettre l'empilage comprenant le pré-composite, la composition adhésive et le caoutchouc à un moulage final sous une pression et à une température appropriées afin de poursuivre la polymérisation de la résine, la vulcanisation de l'élastomère, la réticulation de la composition adhésive avec l'élastomère et la polymérisation de la composition adhésive avec la résine.

Un mode de réalisation particulièrement préférentiel de ce procédé s'applique au cas d'une résine durcissable du type polyester ou (époxy)vinylester et il consiste à utiliser, pour la mise en oeuvre de l'étape B), la composition adhésive selon l'invention précédemment décrite, prête à l'emploi c'est-à-dire ne nécessitant aucun traitement d'activation intermédiaire tel que par exemple une étape de séchage.

Dans le procédé de fabrication ci-dessus, de manière préférentielle, l'étape C) intervient au plus tard dès la fin de l'étape B).

Enfin, la présente invention s'étend également à toute pièce stratifiée, à l'état cru comme à l'état cuit, comportant au moins une couche de composite polyester ou vinylester reliée à une couche de caoutchouc, la liaison entre les deux couches étant assurée par une interphase adhésive comportant une composition adhésive selon l'invention, à base d'élastomère p-VSBR (taux pondéral préférentiel compris entre 10% et 40%) et d'une résine polyester ou vinylester (taux pondéral préférentiel compris entre 40% et 80%).
Selon un mode de réalisation préférentiel de l'invention, dans la pièce stratifiée selon l'invention, le taux de p-VSBR est compris entre 10% et 40% et le taux de résine polyester ou vinylester étant compris entre 40% et 80% (% en poids de composition adhésive à l'état sec).
Selon un autre mode de réalisation préférentiel de l'invention, dans la pièce stratifiée selon l'invention, le taux de p-VSBR est compris entre 15% et 30%.
Selon un autre mode de réalisation préférentiel de l'invention, dans la pièce stratifiée selon l'invention, le taux de résine polyester ou vinylester est compris entre 50% et 75%.

Par l'expression composition "à base de", l'homme du métier comprendra qu'il faut entendre ici une composition adhésive comportant le mélange et/ou le produit de réaction *in situ* des différents constituants utilisés pour cette colle, certains de ces constituants de base (notamment p-VSBR et résine) étant susceptibles de, ou destinés à réagir entre eux ou avec leur environnement chimique proche, au moins en partie, lors des différentes phases de fabrication des pièces stratifiées, en particulier au cours de l'étape de cuisson finale.

### II. EXEMPLES DE REALISATION

Les essais qui suivent ont pour but de démontrer que, malgré un très fort avantage dans le procédé de mise en oeuvre, les performances d'une composition adhésive conforme à l'invention restent au moins identiques, sinon supérieures à celles d'une colle RFL conventionnelle.

### II-1. Préparation de la composition adhésive selon l'invention

### A) Exemple 1 :

Pour la préparation de la colle conforme à l'invention, on a appliqué à titre de premier exemple le procédé particulier qui suit :
a) partir d'un latex d'élastomère p-VSBR ;
b) par distillation azéotropique, extraire l'eau du latex et mettre l'élastomère en solution dans un solvant organique (dans le cas présent, toluène) ;
c) incorporer à l'élastomère ainsi en solution, une résine époxyvinylester en solution dans du styrène, à raison d'un rapport pondéral (résine/élastomère) préférentiel compris entre 1 et 8 (dans le cas présent, égal à 4) ;
d) procéder à une extraction, au moins partielle, des solvants organiques (toluène et styrène).

Plus précisément, on procède de la manière suivante :

On chauffe à reflux, à une température comprise entre 110°C et 112°C, 750 ml de toluène dans un ballon de sulfuration de 1,5 litres. On ajoute ensuite goutte à goutte 50 g de latex p-VSBR ("Pyratex 240" de PolymerLatex), se présentant sous la forme d'une émulsion de polymère dans l'eau (40% de polymère - soit 20 g de p-VSBR - pour 60% d'eau et d'agents stabilisants basiques à pH 10-12).

On distille le mélange eau/toluène à une température de 100°C, en rajoutant peu à peu dans le ballon la même quantité de toluène que ce qui a été extrait (environ 500 ml). La distillation dure ainsi environ 5h jusqu'à une dissolution complète de l'élastomère dans le toluène et l'obtention d'une première solution homogène, très claire.

Une seconde solution organique est préparée, comportant des agents de vulcanisation, du noir de carbone et différents constituants dissous (ou dispersés) dans du toluène (230 ml), solution dont la formulation est adaptée au collage de la couche de caoutchouc visée (décrite au paragraphe II-2 qui suit). La formulation de cette seconde solution est donnée dans le tableau 1 (les quantités en pce sont des parties en poids pour 100 parties d'élastomère p-VSBR).

On mélange ensuite les deux solutions ci-dessus, à la température ambiante, avec 125 g de solution "ATLAC 590" se présentant sous forme d'un mélange de résines de formules (II) et (III) précitées (64% de résine époxyvinylester - soit 80 g de vinylester sec - pour 36% de solvant styrène).

Une fois le mélange homogène, on évapore le toluène et le styrène sous vide jusqu'à une teneur d'environ 15% de solvant (presque exclusivement du styrène). On obtient ainsi une colle très visqueuse, adaptée à l'application visée.

Il est à noter qu'une variante simple de l'exemple de réalisation décrit ci-dessus consiste à intégrer directement tous les ingrédients de la seconde solution (agents de vulcanisation, noir de carbone, etc.) directement dans la première solution, sans passer par la préparation distincte d'une telle seconde solution.

### B) Exemple 2 :

Pour la préparation de la colle conforme à l'invention, on a appliqué à titre de second exemple le procédé particulier qui suit :
a) partir d'un latex d'élastomère p-VSBR ;
b) extraire l'eau du latex par coagulation ;
c) incorporer à l'élastomère une résine vinylester en solution dans du styrène.

Plus précisément, on mélange dans un réacteur 210 ml d'acétone et 415 ml d'HCl 1% (pH égal à environ 1 à 2). Sous agitation et à température ambiante, on ajoute goutte à goutte (durée environ 45 min), sous courant d'azote, un mélange de 50 g de latex p-VSBR ("Pyratex 240") et de 35ml d'eau. Simultanément, pour maintenir le pH à une valeur constante de 1-2, on ajoute goutte à goutte 40 ml d'HCl (10%). Le latex coagule ainsi de manière fine et régulière durant l'ajout. On laisse alors reposer jusqu'à une séparation complète de phases, l'élastomère flottant en surface.

On sépare alors le polymère de la phase aqueuse puis on le lave avec de l'eau en plusieurs fois, pour ramener lentement le pH vers 7. Un dernier lavage peut être réalisé par exemple avec un mélange eau/acétone. Après avoir laissé décanter, on peut traiter le polymère avec un appareil permettant de pulvériser le polymère en des particules très fines. Enfin, on filtre et on sèche le polymère pendant 12 heures, sous vide, à une température de 60°C.

Les 20 g de p-VSBR ainsi obtenus sont ajoutés à 125 g de résine vinylester ("ATLAC 590" - soit 80g de vinylester sec) et on laisse reposer pendant une nuit. Le polymère gonfle en absorbant la résine. On ajoute ensuite le reste des composants (noir, agents de vulcanisation, etc.) directement dans un mélangeur externe (outil à cylindres), à température ambiante, et on mélange le tout jusqu'à l'obtention d'une colle homogène.

Afin d'augmenter la viscosité de la colle mais aussi de diminuer la quantité de solvant dégagée lors de la cuisson du composite sous presse, il est possible de sécher la résine vinylester sous un vide élevé avant de la mélanger avec le polymère, par exemple jusqu'à un taux de styrène résiduel compris entre 10% et 15%.

Soulignons encore que, bien que la colle selon l'invention comporte une certaine quantité résiduelle de solvant, elle n'a pas les inconvénients habituels des colles à solvant car le styrène réagit totalement lors de la mise en oeuvre de la colle en prenant part à la polymérisation ; il n'a donc pas à être évaporé.

### II-2. Préparation des composites et pièces lamifiées - Caractérisation

Les composites testés sont des mélanges de fibres de verre (Owens Corning) imprégnées dans une résine vinylester, tels que décrits dans la demande EP-A-1 074 369 précitée. Le taux de fibres est de 70-75%. Un photo-initiateur ("Irgacure 819" de la société Ciba) est ajouté (2% en poids) afin de prégélifier (prépolymériser) pendant 30 secondes la résine, à 17 cm sous deux lampes UV à 410 nm, de 40 Watts chacune.

On applique ensuite la colle de l'invention sur deux plaques de composite ainsi prégélifié, selon une couche d'épaisseur de 50 à 100 µm. Puis on dispose "en sandwich", entre ces deux plaques de composites revêtues chacune de leur couche adhésive respective, une couche de caoutchouc cru (non vulcanisé) dont la formulation correspond à une composition de caoutchouc connue à base de caoutchouc naturel et de noir de carbone, utilisable notamment comme gomme de calandrage d'armature de renforcement d'une carcasse de pneumatique ; deux formulations différentes (exprimées en pce) sont données à titre d'exemple dans le tableau 2.

L'ensemble est cuit sous presse par exemple à 180°C pendant 45 min, sous une pression de 50 bars permettant la fin de la polymérisation du composite et de la colle, ainsi que la vulcanisation ou cuisson du caoutchouc. Ces paramètres de cuisson ne sont qu'indicatifs, ceux-ci pouvant être modifiés (par exemple cuisson à 165°C pendant 20 min sous une pression de 20 bar) notamment grâce à l'emploi de quantités variables d'accélérateurs ou d'activateurs de polymérisation de la résine vinylester.

Pour la préparation d'une pièce stratifiée (témoin) selon l'art antérieur, on procède de la même manière que précédemment à la différence près que la colle de l'invention est remplacée par une colle conventionnelle RFL (non polymérisée), et que cette dernière doit subir, avant mise en contact avec le caoutchouc cru, un traitement intermédiaire de séchage (température inférieure à 100°C), comme indiqué dans la demande précitée EP-A-1 074 369.

Les pièces stratifiées ainsi préparées sont ensuite soumises à un test de pelage connu tel que décrit dans la norme internationale ISO 8510-1:1990(F). Des valeurs d'arrachage très élevées (750 N de charge pour une largeur de 25 mm) sont observées sur la pièce conforme à l'invention, la pièce témoin obtenant une force d'arrachage inférieure, de l'ordre de 700 N.

L'échantillon conforme à l'invention tout comme le produit témoin présentent, lors du pelage, une rupture dans la couche d'élastomère et non dans l'interphase adhésive, ce qui illustre un niveau adhésif très élevé dans les deux cas.

**Tableau 1**

| | |
|---|---|
| noir de carbone (N683) | 50 |
| résine tackifiante | 1 |
| résine formophénolique | 10 |
| HMT | 3.3 |
| accélérateur de polymérisation (1) | 2 |
| activateur de polymérisation (2) | 0.5 |
| ZnO | 3 |
| acide stéarique | 1 |
| soufre | 2.2 |
| accélérateur de vulcanisation (3) | 0.9 |

| | |
|---|---|
| (1) 2-éthylhexanoate de cobalt II (accélérateur "NL-51P" de Akzo Nobel); (2) N,N-diéthylacétoacétamide ("Promotor C" de Akzo Nobel) ; (3) N-dicyclohexyl-2-benzothiazol-sulfénamide ("Santocure CBS" de la société Flexsys). | |

**Tableau 2**

| | | |
|---|---|---|
| caoutchouc naturel | 100 | 55 |
| élastomère SBR | - | 15 |
| élastomère BR | - | 30 |
| noir de carbone (N326) | 66 | 50 |
| antioxydant (4) | 2.2 | 1.5 |
| huile d'extension | 2 | 10 |
| ZnO | 7.5 | 5.0 |
| acide stéarique | 0.6 | 0.6 |
| soufre | 4.5 | 3.0 |
| accélérateur de vulcanisation (5) | 0.7 | 0.9 |

| | | |
|---|---|---|
| (4) N-(1,3-diméthylbutyl)-N'-phényl-p-phénylènediamine; ("Santoflex 6-PPD" de la société Flexsys) ; (5) N-dicyclohexyl-2-benzothiazol-sulfénamide ("Santocure CBS" de la société Flexsys). | | |

## Revendications

1. Composition adhésive réticulable au soufre, du type non-aqueuse c'est-à-dire comportant moins de 5% en poids d'eau, **caractérisée en ce qu'**elle comporte au moins un élastomère polyvinylpyridine-styrène-butadiène (en abrégé "p-VSBR") et une résine polyester ou vinylester.

2. Composition selon la revendication 1, le taux de p-VSBR étant compris entre 10% et 40% et le taux de résine polyester ou vinylester étant compris entre 40% et 80% (% en poids de composition adhésive à l'état sec).

3. Composition selon la revendication 2, le taux de p-VSBR étant compris entre 15% et 30%.

4. Composition selon les revendications 2 ou 3, le taux de résine polyester ou vinylester étant compris entre 50% et 75%.

5. Composition selon l'une quelconque des revendications 1 à 4, ladite composition comportant en outre, en tant que solvant de la résine polyester ou vinylester, entre 0% et 40% de styrène (% en poids de composition finale, prête à l'emploi).

6. Composition selon la revendication 5, le taux de styrène étant compris entre 10% et 30%.

7. Composition selon l'une quelconque des revendications 1 à 6, ladite composition comportant en outre entre 0 et 5% de toluène en tant que solvant de l'élastomère p-VSBR.

8. Composition selon l'une quelconque des revendications 1 à 7, la résine étant une résine vinylester, de préférence du type époxyvinylester.

9. Composition selon la revendication 8, la résine vinylester étant une résine vinylester à base novolaque et/ou bisphénolique.

10. Composition selon l'une quelconque des revendications 1 à 9, ladite composition comportant en outre un accélérateur et un activateur de polymérisation.

11. Composition selon l'une quelconque des revendications 1 à 10, ladite composition comportant en outre un système de réticulation, de préférence à base de soufre et d'accélérateur sulfénamide.

12. Composition selon l'une quelconque des revendications 1 à 11, ladite composition comportant en outre une charge renforçante, de préférence choisie dans le groupe constitué par le noir de carbone et la silice.

13. Composition selon l'une quelconque des revendications précédentes, ladite composition comportant moins de 2%, de préférence moins de 1% en poids d'eau.

14. Procédé pour préparer une composition adhésive réticulable au soufre, du type non-aqueuse c'est-à-dire comportant moins de 5% en poids d'eau, et utilisable pour le collage d'un composite polyester ou vinylester à un élastomère diénique, **caractérisé en ce qu'**il comporte les étapes suivantes :
a) partir d'un latex d'élastomère p-VSBR ;
b) extraire l'eau du latex ;
c) incorporer à l'élastomère une résine polyester ou vinylester en solution dans du styrène.

15. Procédé selon la revendication 14, le rapport pondéral résine/p-VSBR dans l'étape c) étant compris entre 1 et 8.

16. Procédé selon la revendication 15, le rapport pondéral résine/p-VSBR dans l'étape c) étant compris entre 2,0 et 6,0.

17. Procédé selon l'une quelconque des revendications 14 à 16, l'eau du latex étant extraite, au cours de l'étape b), par action d'un agent coagulant.

18. Procédé selon l'une quelconque des revendications 14 à 16, l'eau du latex étant extraite, au cours de l'étape b), par distillation azéotropique et mise en solution de l'élastomère dans un solvant organique.

19. Procédé selon la revendication 18, le solvant organique étant du toluène.

20. Procédé selon les revendications 18 ou 19, le taux d'élastomère p-VSBR dans le solvant organique, à l'issue de l'étape b), étant compris entre 0,5% et 5% pour un taux de solvant entre 99,5% et 95% et (% en poids).

21. Procédé selon l'une quelconque des revendications 18 à 20, ledit procédé comportant une étape supplémentaire d) d'extraction, au moins partielle, des solvants organiques.

22. Procédé selon la revendication 21, les solvants organiques étant extraits, au cours de l'étape d), jusqu'à un taux de styrène résiduel compris entre 0% et 40% et un taux de toluène résiduel compris entre 0% et 5%.

23. Procédé selon l'une quelconque des revendications 14 à 22, la résine étant une résine vinylester, de préférence une résine du type époxyvinylester.

24. Procédé selon la revendication 23, la résine vinylester étant une résine vinylester à base novolaque et/ou bisphénolique.

25. Procédé selon l'une quelconque des revendications précédentes, ladite composition comportant moins de 2%, de préférence moins de 1% en poids d'eau.

26. Utilisation d'une composition adhésive selon l'une quelconque des revendications 1 à 13, pour le collage d'un composite polyester ou vinylester à un élastomère diénique.

27. Utilisation selon la revendication 26, l'élastomère diénique étant choisi dans le groupe constitué par les polybutadiènes, le caoutchouc naturel, les polyisoprènes de synthèse, les copolymères de butadiène-styrène, les copolymères d'isoprène-butadiène, les copolymères d'isoprène-styrène, les copolymères de butadiène-styrène-isoprène et les mélanges de ces élastomères.

28. Utilisation selon la revendication 27, l'élastomère diénique étant choisi dans le groupe constitué par le caoutchouc naturel, les polyisoprènes de synthèse et les mélanges de ces élastomères.

29. Procédé de fabrication de pièces stratifiées comprenant au moins un composite comportant des fibres de renforcement noyées dans une matrice à base d'une composition comprenant une résine polyester ou vinylester et au moins un caoutchouc solidaire dudit composite, ledit procédé comportant les étapes suivantes :
A) disposer un pré-composite comportant des fibres de renforcement noyées dans la résine, celle-ci étant prépolymérisée ;
B) revêtir ledit pré-composite d'une couche d'une composition adhésive prête à l'emploi selon l'une quelconque des revendications 1 à 13 ;
C) revêtir ladite composition d'une couche de caoutchouc vulcanisable au soufre ;
D) soumettre l'empilage comprenant le pré-composite, la composition adhésive et le caoutchouc à un moulage final sous une pression et à une température appropriées afin de poursuivre la polymérisation de la résine, la vulcanisation du caoutchouc, la réticulation de la composition adhésive avec le caoutchouc et la polymérisation de la composition adhésive avec la résine.

30. Procédé selon la revendication 29, dans lequel l'étape C) intervient au plus tard dès la fin de l'étape B).

31. Pièce stratifiée comportant au moins une couche de composite polyester ou vinylester reliée à une couche d'élastomère diénique la liaison entre les deux couches étant assurée par une composition adhésive du type non-aqueuse selon l'une quelconque des revendications 1 à 13 c'est-à-dire comportant moins de 5% en poids d'eau, à base d'élastomère p-VSBR et de résine polyester ou vinylester.

32. Pièce stratifiée selon la revendication 31, le taux de p-VSBR étant compris entre 10% et 40% et le taux de résine polyester ou vinylester étant compris entre 40% et 80% (% en poids de composition adhésive à l'état sec).

33. Pièce stratifiée selon la revendication 32, le taux de p-VSBR étant compris entre 15% et 30%.

34. Pièce stratifiée selon les revendications 32 ou 33, le taux de résine polyester ou vinylester étant compris entre 50% et 75%.

## Claims

1. A sulfur-crosslinkable adhesive composition, of the non-aqueous type that is to say comprising less than 5% by weight of water, **characterised in that** it comprises at least a polyvinylpyridine-styrene-butadiene (abbreviated to "p-VSBR") elastomer and a polyester or vinyl ester resin.

2. A composition according to Claim 1, the content of p-VSBR being of between 10% and 40% and the content of polyester or vinyl ester resin being between 40% and 80% (% by weight of the adhesive composition in the dry state).

3. A composition according to Claim 2, the content of p-VSBR being between 15% and 30%.

4. A composition according to Claims 2 or 3, the content of polyester or vinyl ester resin being between 50% and 75%.

5. A composition according to any one of Claims 1 to 4, said composition furthermore comprising, as solvent for the polyester or vinyl ester resin, between 0% and 40% of styrene (% by weight of the final, ready-to-use composition).

6. A composition according to Claim 5, the content of styrene being between 10% and 30%.

7. A composition according to any one of Claims 1 to 6, said composition furthermore comprising between 0 and 5% of toluene as solvent for the p-VSBR elastomer.

8. A composition according to any one of Claims 1 to 7, the resin being a vinyl ester resin, preferably of the epoxy vinyl ester type.

9. A composition according to Claim 8, the vinyl ester resin being a novolak and/or bisphenol based vinyl ester resin.

10. A composition according to any one of Claims 1 to 9, said composition furthermore comprising a polymerisation accelerator and activator.

11. A composition according to any one of Claims 1 to 10, said composition furthermore comprising a crosslinking system, preferably based on sulfur and sulfenamide accelerator.

12. A composition according to any one of Claims 1 to 11, said composition furthermore comprising a reinforcing filler, preferably selected within the group consisting of carbon black and silica.

13. A composition according to any one of the preceding claims, said composition comprising less than 2%, preferably less than 1% by weight of water.

14. A process for preparing a sulfur-crosslinkable adhesive composition, of the non-aqueous type that is to say comprising less than 5% by weight of water, usable for bonding a polyester or vinyl ester composite to a diene elastomer, **characterised in that** it comprises the following steps:
a) starting from a p-VSBR elastomer latex;
b) extracting the water from the latex;
c) incorporating into the elastomer a polyester or vinyl ester resin in solution in styrene.

15. A process according to claim 14, the resin:p-VSBR weight ratio in step c) being between 1 and 8.

16. A process according to Claim 15, the resin:p-VSBR weight ratio in step c) being between 2.0 and 6.0.

17. A process according to any one of Claims 14 to 16, the water being extracted from the latex during step b) by the action of a coagulant agent.

18. A process according to any one of Claims 14 to 16, the water being extracted from the latex during step b) by azeotropic distillation and dissolution of the elastomer in an organic solvent.

19. A process according to Claim 18, the organic solvent being toluene.

20. A process according to Claims 18 or 19, the content of p-VSBR elastomer in the organic solvent, on completion of step b), being between 0.5% and 5% with a solvent content of between 99.5% and 95% (% by weight).

21. A process according to any one of Claims 18 to 20, said process comprising an additional step d) for at least partial extraction of the organic solvents.

22. A process according to Claim 21, the organic solvents being extracted during step d) down to a residual styrene content of between 0% and 40% and a residual toluene content of between 0% and 5%.

23. A process according to any one of Claims 14 to 22, the resin being a vinyl ester resin, preferably a resin of the epoxy vinyl ester type.

24. A process according to Claim 23, the vinyl ester resin being a novolak and/or bisphenol based vinyl ester resin.

25. A process according to any one of the preceding claims, said composition comprising less than 2%, preferably less than 1% by weight of water.

26. Use of an adhesive composition according to any one of Claims 1 to 13, for bonding a polyester or vinyl ester composite to a diene elastomer.

27. Use according to Claim 26, the diene elastomer being selected within the group consisting of polybutadienes, natural rubber, synthetic polyisoprenes, butadiene-styrene copolymers, isoprene-butadiene copolymers, isoprene-styrene copolymers, butadiene-styrene-isoprene copolymers and mixtures of these elastomers.

28. Use according to Claim 27, the diene elastomer being selected within the group consisting of natural rubber, synthetic polyisoprenes and mixtures of these elastomers.

29. A process for the production of laminated parts comprising at least one composite comprising reinforcement fibres embedded in a matrix based on a composition comprising a polyester or vinyl ester resin and at least one rubber firmly connected to said composite, said process comprising the following steps:
A) providing a precomposite comprising reinforcement fibres embedded in the resin, the latter being prepolymerised;
B) coating said precomposite with a layer of a ready-to-use adhesive composition according to any one of claims 1 to 13;
C) coating said composition with a layer of sulfur-vulcanisable rubber;
D) subjecting the stack comprising the precomposite, the adhesive composition and the rubber to final moulding under a pressure and at a temperature appropriate for continuing the polymerisation of the resin, the vulcanisation of the rubber, the crosslinking of the adhesive composition with the rubber and the polymerisation of the adhesive composition with the resin.

30. A process according to Claim 29, in which step C) takes place at the latest immediately on completion of step B).

31. A laminated part comprising at least one layer of polyester or vinyl ester composite connected to a layer of diene elastomer, the connection between the two layers being provided by an adhesive composition of the non-aqueous type according to any one of claims 1 to 13, that is to say comprising less than 5% by weight of water, based on p-VSBR elastomer and polyester or vinyl ester resin.

32. A laminated part according to Claim 31, the content of p-VSBR being between 10% and 40% and the content of polyester or vinyl ester resin being between 40% and 80% (% by weight of adhesive composition in the dry state).

33. A laminated part according to Claim 32, the content of p-VSBR being between 15% and 30%.

34. A laminated part according to Claims 32 or 33, the content of polyester or vinyl ester resin being between 50% and 75%.

## Patentansprüche

1. Schwefelvernetzbare Klebstoffzusammensetzung vom nichtwässrigen Typ, d.h. mit weniger als 5 Gew.-% Wasser, **dadurch gekennzeichnet, dass** sie mindestens ein Polyvinylpyridin-Styrol-Butadien-Elastomer (abgekürzt "p-VSBR"-Elastomer) und ein Polyester- oder Vinylesterharz umfasst.

2. Zusammensetzung nach Anspruch 1, wobei der Gehalt an p-VSBR zwischen 10% und 40% liegt und der Gehalt an Polyester- oder Vinylesterharz zwischen 40% und 80% liegt (Gew.-% der Klebstoffzusammensetzung in trockenem Zustand).

3. Zusammensetzung nach Anspruch 2, wobei der Gehalt an p-VSBR zwischen 15% und 30% liegt.

4. Zusammensetzung nach Anspruch 2 oder 3, wobei der Gehalt an Polyester- oder Vinylesterharz zwischen 50% und 75% liegt.

5. Zusammensetzung nach einem der Ansprüche 1 bis 4, wobei die Zusammensetzung außerdem als Lösungsmittel für das Polyester- oder Vinylesterharz zwischen 0% und 40% Styrol umfasst (Gew.-% der einsatzbereiten fertigen Zusammensetzung).

6. Zusammensetzung nach Anspruch 5, wobei der Styrolgehalt zwischen 10% und 30% liegt.

7. Zusammensetzung nach einem der Ansprüche 1 bis 6, wobei die Zusammensetzung außerdem zwischen 0% und 5% Toluol als Lösungsmittel für das p-VSBR-Elastomer umfasst.

8. Zusammensetzung nach einem der Ansprüche 1 bis 7, wobei es sich bei dem Harz um ein Vinylesterharz, vorzugsweise vom Epoxyvinylester-Typ, handelt.

9. Zusammensetzung nach Anspruch 8, wobei es sich bei dem Vinylesterharz um ein Vinylesterharz auf Novolak- und/oder Bisphenol-Basis handelt.

10. Zusammensetzung nach einem der Ansprüche 1 bis 9, wobei die Zusammensetzung außerdem einen Polymerisationsbeschleuniger und -aktivator umfasst.

11. Zusammensetzung nach einem der Ansprüche 1 bis 10, wobei die Zusammensetzung außerdem ein Vernetzungssystem, vorzugsweise auf Basis von Schwefel und Sulfenamid-Beschleuniger umfasst.

12. Zusammensetzung nach einem der Ansprüche 1 bis 11, wobei die Zusammensetzung außerdem einen verstärkenden Füllstoff, der vorzugsweise aus der Gruppe bestehend aus Ruß und Siliciumdioxid ausgewählt ist, umfasst.

13. Zusammensetzung nach einem der vorhergehenden Ansprüche, wobei die Zusammensetzung weniger als 2%, vorzugsweise weniger als 1%, Wasser umfasst.

14. Verfahren zur Herstellung einer schwefelvernetzbaren Klebstoffzusammensetzung vom nichtwässrigen Typ, d.h. mit weniger als 5 Gew.-% Wasser, die zum Verkleben eines Polyester- oder Vinylesterverbundwerkstoffs mit einem Dienelastomer verwendbar ist, **dadurch gekennzeichnet, dass** man:
a) von einem p-VSBR-Elastomer-Latex ausgeht;
b) aus dem Latex das Wasser entfernt;
c) in das Elastomer ein in Styrol gelöstes Polyester- oder Vinylesterharz einarbeitet.

15. Verfahren nach Anspruch 14, wobei das Harz/p-VSBR-Gewichtsverhältnis in Schritt c) zwischen 1 und 8 liegt.

16. Verfahren nach Anspruch 15, wobei das Harz/p-VSBR-Gewichtsverhältnis in Schritt c) zwischen 2,0 und 6,0 liegt.

17. Verfahren nach einem der Ansprüche 14 bis 16, wobei das Entfernen des Wassers aus dem Latex in Schritt b) durch Einwirkung eines Koagulationsmittels erfolgt.

18. Verfahren nach einem der Ansprüche 14 bis 16, wobei das Entfernen des Wassers aus dem Latex in Schritt b) durch azeotrope Destillation und Lösen des Elastomers in einem organischen Lösungsmittel erfolgt.

19. Verfahren nach Anspruch 18, wobei es sich bei dem organischen Lösungsmittel um Toluol handelt.

20. Verfahren nach Anspruch 18 oder 19, wobei der Gehalt an p-VSBR-Elastomer in dem organischen Lösungsmittel am Ende von Schritt b) zwischen 0,5% und 5% bei einem Lösungsmittelgehalt zwischen 99,5 und 95% (Gew.-%) liegt.

21. Verfahren nach einem der Ansprüche 18 bis 20, wobei das Verfahren einen zusätzlichen Schritt d) umfasst, bei dem man die organischen Lösungsmittel zumindest teilweise entfernt.

22. Verfahren nach Anspruch 21, wobei die organischen Lösungsmittel in Schritt d) bis zu einem Reststyrolgehalt zwischen 0% und 40% und einem Resttoluolgehalt zwischen 0% und 5% entfernt werden.

23. Verfahren nach einem der Ansprüche 14 bis 22, wobei es sich bei dem Harz um ein Vinylesterharz, vorzugsweise um ein Harz vom Epoxyvinylester-Typ, handelt.

24. Zusammensetzung nach Anspruch 23, wobei es sich bei dem Vinylesterharz um ein Vinylesterharz auf Novolak- und/oder Bisphenol-Basis handelt.

25. Verfahren nach einem der vorhergehenden Ansprüche, wobei die Zusammensetzung weniger als 2%, vorzugsweise weniger als 1%, Wasser umfasst.

26. Verwendung einer Klebstoffzusammensetzung nach einem der Ansprüche 1 bis 13 zum Verkleben eines Polyester- oder Vinylesterverbundwerkstoffs mit einem Dienelastomer.

27. Verwendung nach Anspruch 26, wobei das Dienelastomer aus der Gruppe bestehend aus Polybutadienen, Naturkautschuk, synthetischen Polyisoprenen, Butadien-Styrol-Copolymeren, Isopren-Butadien-Copolymeren, Isopren-Styrol-Copolymeren, Butadien-Styrol-Isopren-Copolymeren und Mischungen dieser Elastomere ausgewählt ist.

28. Verwendung nach Anspruch 27, wobei das Dienelastomer aus der Gruppe bestehend aus Naturkautschuk, synthetischen Polyisoprenen und Mischungen dieser Elastomere ausgewählt ist.

29. Verfahren zur Herstellung von Schichtteilen, umfassend mindestens einen Verbundwerkstoff mit Verstärkungsfasern, die in einer Matrix einer ein Polyester- oder Vinylesterharz umfassenden Zusammensetzung eingebettet sind, und mindestens einen damit einstückig ausgebildeten Kautschuk, bei dem man:
A) einen Vorverbundwerkstoff, der in dem Harz eingebettete Verstärkungsfasern umfasst, wobei das Harz vorpolymerisiert ist, bereitstellt;
B) den Vorverbundwerkstoff mit einer Schicht einer einsatzbereiten Klebstoffzusammensetzung nach einem der Ansprüche 1 bis 13 beschichtet;
C) die Zusammensetzung mit einer Schicht von schwefelvulkanisierbarem Kautschuk beschichtet;
D) die Schichtanordnung, die den Vorverbundwerkstoff, die Klebstoffzusammensetzung und den Kautschuk umfasst, einer abschließenden Formgebung unter Druck- und Temperaturbedingungen, die zur Polymerisation des Harzes, zur Vulkanisation des Kautschuks, zur Vernetzung der Klebstoffzusammensetzung mit dem Kautschuk und zur Polymerisation der Klebstoffzusammensetzung mit Harz geeignet sind, unterwirft.

30. Verfahren nach Anspruch 29, bei dem Schritt C) spätestens gleich nach dem Ende von Schritt B) erfolgt.

31. Schichtteil, umfassend mindestens eine Schicht aus Polyester- oder Vinylesterverbundwerkstoff, die mit einer Dienelastomerschicht verbunden ist, wobei die Verbindung zwischen den beiden Schichten durch eine Klebstoffzusammensetzung vom nichtwässrigen Typ nach einem der Ansprüche 1 bis 13, d.h. mit weniger als 5 Gew.-% Wasser, auf Basis von p-VSBR-Elastomer und Polyester- oder Vinylesterharz gewährleistet ist.

32. Schichtteil nach Anspruch 31, wobei der Gehalt an p-VSBR zwischen 10% und 40% liegt und der Gehalt an Polyester- oder Vinylesterharz zwischen 40% und 80% liegt (Gew.-% der Klebstoffzusammensetzung in trockenem Zustand).

33. Schichtteil nach Anspruch 32, wobei der Gehalt an p-VSBR zwischen 15% und 30% liegt.

34. Schichtteil nach Anspruch 32 oder 33, wobei der Gehalt an Polyester- oder Vinylesterharz zwischen 50% und 75% liegt.
